# EUROPEAN PATENT APPLICATION

(11) **EP 1 205 485 A1**
(43) Date of publication of application: **15.05.2002**
(21) Application number: 99954552.8
(22) Date of filing: 26.07.1999
(51) Int. Cl.: C07F 9/40, C08F 230/02, C08F 220/14, C08F 220/18, D06M 14/04, D06M 14/16, C09K 21/14

(54) **METHOD FOR PRODUCING POLYMER MATERIALS WITH REDUCED FIRE RISK**

(71) Applicant: Isle Firestop Ltd., Douglas, Isle of Man IM1 2PT (GB)
(72) Inventor: ZUBKOVA, Nina Sergeevna, Moscow, 117574 (RU); BUTYLKINA, Nataliya Grigorievna, Moscow, 113461 (RU); KHALTURINSKY, Nikolai Alexandrovich, Moscow, 117229 (RU); BERLIN, Alexandr Alexandrovich, Moscow, 117419 (RU)
(74) Representative: Harrison Goddard Foote
(86) International application number: RU9900255
(87) International publication number: WO0107448

(57) **Abstract**

A description is given of a new combustion retardant for polymer materials, consisting of methyl(oxyalkyl)phosphono-oxyethylene methacrylate of the formula

**CH**_{**2**}**=C(R)-C(O)[0CH**_{**2**}**CH**_{**2**}**OP(O)(R)(OR**_{**1**}**)]**

**where R - CH**_{**3**}**; R**_{**1**} **- CH**_{**3**}**, C**_{**2**}**H**_{**5**}**, C**_{**3**}**H**_{**7**}**, C**_{**4**}**H**_{**9**}.

The combustion retardant can be used primarily as a comonomer in the process of copolymerisation with methyl methacrylate, and also to impart fireproofing properties to chemical fibres. In the latter case, the method of inoculation polymerisation is used.

## Description

### Technology field

The invention relates to a technology for the production of polymer materials (fibres and plastics, including those based on polymethyl methacrylate) of different composition and filling with reduced combustibility and low smoke emission. Fireproofed chemical fibres are intended for the manufacture of decorative finishing fabrics used in places frequented by people in large numbers (housing blocks, public transport, social and cultural buildings etc.) and for making overalls. The use of fire-resistant materials based on polymethyl methacrylate, mainly organic glasses and triplexes, is extremely varied; in aircraft and motor vehicle manufacturing and shipbuilding as a structural material; in industry, civil engineering and the illumination technology industry to make protective covers for sources of illumination; in the chemical industry for making tubes, and so on.

### Prior Art

A significant drawback in the majority of industrially produced polymer materials, both chemical fibres and plastics, is their high fire risk, i.e. their high flammability, with the emission of considerable quantities of volatile toxic products.

One of the methods of reducing the combustibility of polymers of different compositions (carbon-chain and heterochain) is the method of inoculation and block copolymerisation using combustion retardants (CR), the composition of which includes inhibiting elements (phosphorus, halogens) and which contain double bonds. The use of inoculation polymerisation has found wide application for reducing the combustibility of cellulose and polyamide fibres.

There is a known process for producing fireproofed viscose fibres by the radiation inoculation of the cellulose with dichloroethyl polyvinyl phosphonate or dimethyl phosphonopolymethacrylate ("Fyrol-76") (J. Macromol. Sci., A, 1976, V.10, N4, P.675-707). The Austrian firm "Lenzing" has proposed a method for obtaining fireproofed inoculated copolymers of cellulose using an oxidising-reducing system in which the part of the reducer is played by the xanthogen groups (Rogovin Z.A., Galbraith L.S. The Chemical Transformation and Modification of Cellulose. Moscow: Khimiya, 1979.-P.177). The inoculation-reaction polymerisation of cellulose was carried out with the water-soluble oligomer bis-(2-chlor-ethyl) vinyl phosphonate and N- methylomethacrylamide. The initiation of the reaction was achieved by the action of potassium persulfate. The fire resistance effect was achieved with a content of 20% inoculated polymer in the material (Text. Chem. Color., 1977, V.9, N 6, P.17-20).

The authors of the work (Radiation Phys. and Chem., 1977, V.9, N 6, P.465-474) used the inoculation polymerisation method to make cotton fire-resistant The process of inoculation induced by radiation was conducted in a medium of monomers containing phosphorus and bromine or made from emulsions of them. Vinyl bromide or vinylidene bromide and 2.3-dibromopropylmethacrylate were used as the monomers containing bromine, and diethyl vinyl phosphonate and also "Fyrol-76" as those containing phosphorus. However, these processes for initiating inoculation polymerisation are quite difficult to implement in practice in a process for producing fire-resistant fibres.

Fireproofed viscose fibres have been produced by synthesising inoculated copolymers with poly-2-methyl-5-vinylpyridine and then treating them with a 0.15-1.0% solution of metaphosphoric acid for 10-20 min. at 20-60°C (USSR Authorship Certificate No. 344053). The trouble with this method is the low stability of the fire-resistance effect when subjected to wet treatments, The substitution of chloroendic acid for metaphosphoric acid makes it possible to produce freproofed cellulose materials with high fireproofing qualities which are considerably more stable when subjected to water treatments. The effectiveness of fireproofing produced by chloroendic acid can be increased considerably by using a triple synergic system of CR containing nitrogen, halogens and metal. Where this system is used, the chlorine content required to produce fireproofed materials is reduced to 4%. (USSR Authorship Certificate No. 1296767),

Fireproofed inoculated copolymers of cellulose have been obtained using compounds of the vinyl or butadiene class containing phosphorus and halogens as monomers (Izvestiya vuzov. Khimiya i khimicheskaya tekhnologiya, 1978, T.XXI, No. 12, P. 1827-1829). However, to produce fireproofed materials, not less than 40% of the inoculated component must be introduced into the cellulose, which leads to a deterioration in the useful properties of the fibres produced.

The inoculation polymerisation method has become quite widely used to modify synthetic fibres too (Tyuganova M.A., Kopyev M.A., Kocharov S.A. Fireproofed textile materials // Zh. VkhO im. D.I. Mendeleyev. - 1981.- T. XXVII.-No.. 4 - P. 421-428).

To modify polycaproamide (PCA) by this method, vinyl compounds containing phosphorus and halogens are used.

Several works propose conducting the radiation inoculation polymerisation with PCA of vinyl phosphonate (Fyrol-76) and tribromophenoxyethyl acrylate (Walsh W.K., Gupta B.S., Green S.J. J. Coated Fabncs.-1981,- V. 4.-No. 10.- P. 255-281). To produce self-extinguishing fibre, up to 40 wt.% of CR must be added to the PCA, which considerably lowers the physico-mechanical indicators and the classification of the material.

Another work (Mukhin B.A., Druzhinina T.V., Mezhikovskiy S.M. Study of thermal and thermo-oxidising destruction of polycaproamide and fireproofed polyamide fibres // Khim. Volokna.-1973.- No. 4 P. 55-58) proposes a method of producing PCA with reduced combustibility by inoculation polymerisation onto the fibre of poly-2-methyl-5-vinylpyridine using the oxidation-reduction system Fe⁺² + H₂O₂ followed by treating the copolymer obtained with metaphosphoric acid. The modified fibre possessed an enhanced carbonising capacity, which gave it quite high fireproofing indicators. The problem with this process is that the inoculated copolymer of PCA with phosphoric acid salt of poly-2-methyl-5-vinylpyridine is hydrolytically unstable due to the presence of the salt bond, which limits the possibilities of the practical implementation of this method.

The capacity of pyridine nitrogen inoculated poly-2-methyl-5-vinylpyridine to form salts with various acids was used in developing a method of imparting fireproofing properties to PCA which would not be affected by wet treatments (Efros A.V., Tyuganov M.A. et al., Khimicheskiye volokna, 1983, No. 6).

The halogen-organic acids 1,4,5,6,7,7-hexachloro-biscyclo- (2,2,1) -heptane-2,3-dicarbonic (chloroendic) acid and tetrabromofluoric acid were selected as acids forming insoluble salts with poly-2-methyl-5-vinylpyridine. These acids are characterised by their high halogen content and decompose at a temperature interval close to the decomposition temperature interval of PCA. It is demonstrated in the work that the effectiveness of the fireproofing effect of the selected halogen-organic acids was raised by using a triple synergic system: inoculated poly-2-methyl-5-vinylpyridine - chloroendic (tetrabromofluoric) acid - anion complex of antimony with tartaric acid. The introduction into PCA fibre of 25-29% of a three-component CR system (content in fibre of bromine or chlorine 6.4%, of pyridinic acid 0.7% and of antimony 4.0%) makes it possible to produce fibres with oxygen index OI = 29%. The fireproofing effect obtained is resistant to repeated washing with neutral washing fluids and to chemical cleaning.

A simpler method of reducing the combustibility pf PCA by inoculation polymerisation is proposed in another work (RF Patent 2099453). A derivative of methylphosphonic acid, "Facryl-M", is used as the monomer. It formula is:

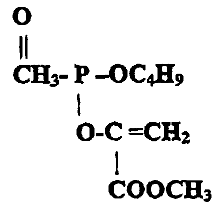

The studies carried out showed that the highest fireproofing characteristics were found for inoculated copolymers of PCA produced in the following conditions: concentration of "Facryl-M" 7%, temperature of reaction 80°C and duration of synthesis 120 min. In these conditions, the inoculated copolymers of PCA produced contained up to 27% of copolymer containing phosphorus and their OI was 28.7%. However, the difficulty of synthesising "Facryl-M" makes its widespread industrial introduction difficult.

Methyl methacrylate-based polymers are used for making organic glasses, which are becoming more and more widely used. The main problem with these materials is their high combustibility and smoke emission. Much attention used to be paid to using compounds containing metals and halogens as CRs.

The CRs containing metal which were used were mainly aluminium trihydroxide or magnesium hydroxide. The firm ICI Chemical and Polymer Ltd. developed fireproofed compositions based on methacrylic resins in combination with aluminium trihydroxide under the trade name Modar (16^{th} Reinforced Plast. Congr., Blackpool, 1988, P. 27-31).

US Patent 4952428 proposes the use of magnesium hydroxide as a CR. Polymer compositions are fireproofed by adding magnesium hydroxide in quantity up to 350 parts by weight to 100 parts by weight of the thermoplastic. This high proportion of filling has a negative effect on the properties of the polymer lattice.

Bromo-organic compounds of the aromatic class are used to a degree of filling of up to 50% to produce low-flammability compositions based on polyalkyl methacrylates. The synergist used here is antimony oxide (Japanese application 3-229790).

CRs based on compounds containing phosphorohalogens are more effective. The use of non-carcinogenic haloido-alkyl phosphates as an antipyrene for polymethyl methacrylate is proposed. These are produced by the reaction of neopentyl glycol and phosphorus trichloride, with further bromation of the intermediate product and treatment of the monoester formed with ethylene oxide (US Patent 4696963).

There are known compositions based on polymethyl methacrylate containing 15-40% dichloropropylphosphonobutadiene as a CR. However, the problem with this composition is its low thermal stability. To overcome this, bis-1,1-(4,3,5-dibromophenyl)-2,2-dichloroethylidene in quantity 15-35 wt.% of the composition (USSR Authorship Certificate No. 718464) and bis-(chloroethyl)bromovinyl phosphonate in quantity 15-25 wt.% of the methacrylic monomers (USSR Authorship Certificate No. 458563) are used as the CR for homo- or copolymers.

To produce fireproofed compositions on the basis of polymethyl methacrylate, a mixture of bromo-organic compounds of the aliphatic class and organic compounds of trivalent phosphorus (trinonylphenyl phosphite, triphenyl phosphite, distearylpentaerythritodiphosphite etc. is used (Japanese application 3-227368).

However, the problems with using CRS containing halogens are high smoke emission, corrosion of the equipment and reduced resistance to the effect of ultraviolet radiation. Furthermore, the introduction of these CR systems into polymer compositions leads to a change in the transparency of organic glasses based on polymethyl methacrylate and a sweating effect can be observed when articles made from it are used, which is particularly true for a high proportion of filling. Therefore, the synthesis of inoculated copolymers of methacrylate with monomers containing phosphorus looks a better prospect for reducing combustibility.

There is a known process for producing fire-resistant organic glass by the synthesis of copolymers of methyl methacrylate with diallyl methyl phosphonate and phosphonoxylacrylate (Vysokomolekulyamyye soyedineniya, 1978, T. XX B, No. 11, P. 873). The introduction into the composition of the copolymer of up to 50% CR containing phosphorus makes it possible to produce materials with an oxygen index (OI) of 24.5-25.5%.

There is also a known process for producing fire-resistant organic glass by the polymerisation of 5-methylene-1.3-dioxolane-4-on or its copolymerisation with vinyl monomers, e.g. methyl methacrylate in mass at a temperature of 40-150°C in the presence of a radical initiator and antipyrene - an organic phosphate (e.g. trichloroethyl phosphate) or phosphonate (USSR Authorship Certificate No. 665607). However, it is not possible to produce light filters based on this highly heat-resistant organic glass by the known method due to the high activity of the monomer 5-methylene-1.3-dioxolane-4-on.

There are also known γ-substituted vinyl phosphates of the following formula:

**CH**_{**2**}**=C(OP(0)(OC**_{**2**}**H**_{**5**}**)COOC**_{**2**}**H**_{**5**}

which can be used for creating self-extinguishing compositions. These monomers are very difficult to polymerise and copolymerise, and coloured viscous resins are produced with them.

Esters of -oxyacrylic and phosphonic acids of the following general formula (USSR Authorship Certificate No. 493116) are used to prepare self-extinguishing organic glasses:

**CH**_{**2**}**=C[OP(0)R**_{**2**}**(OR**_{**1**}**)]COOR**

**Where**
- **R -**: **CH**_{**3**}**, C**_{**2**}**H**_{**5**}**, C**_{**2**}**H**_{**4**}**Cl;**
- **R**_{**1**} **-**: **CH**_{**3**}**, C**_{**2**}**H**_{**5**}**, C**_{**2**}**H**_{**4**}**Cl, H-C**_{**3**}**H**_{**7**}**;**
- **R**_{**2**}**-**: **CH**_{**3**}**.**

Polymers and copolymers based on these compounds and acrylic monomers are colourless and transparent. The homopolymers, when introduced into a flame, hardly burn at all, and the copolymers are self-extinguishing. However, the difficulty of synthesising monomers containing phosphorus, and therefore the high cost of doing so, makes it hard to make practical use of them.

### Substance of the invention

In spite of the large number of known methods of producing fireproofed polymer materials, including chemical fibres and compositions based on polymethyl methacrylate, the problem of reducing the combustibility of polymers remains extremely urgent. This invention is devoted primarily to solving this problem.

Other purposes of the invention are:
- to reduce the smoke emission capacity during pyrolysis and combustion of fireproofed polymer materials by reducing the rate of thermo-oxidising decomposition and increasing the output of carbonised residue;
- to eliminate dripping in the combustion of modified polymers;
- and to make it possible to implement the developed methods using equipment already existing at chemical industry enterprises.

These problems are solved by this invention, the substance of which is, primarily, the use of a new combustion retardant for polymer materials, for which methyl(oxyalkyl)phosphono-oxyethylene methacrylate of the following formula is proposed:

**CH**_{**2**}**=C(R)-C(O)[0CH**_{**2**}**CH**_{**2**}**OP(O)(R)(OR**_{**1**}**)]**

**where R - CH**_{**3**}**; R**_{**1**} **- CH**_{**3**}**, C**_{**2**}**H**_{**5**}**, C**_{**3**}**H**_{**7**}**, C**_{**4**}**H**_{**9**}**.**

These substances can be produced by the interaction of dichloroanhydrides of alkylphosphonic acids with aliphatic alcohols and ethylene glycol ester of methacrylic acid in a medium of organic solvent at 8-10°C in the presence of an organic base, e.g. triethylamine.

This CR can be used by various methods.

One method of producing polymer materials of this type which is applied for is the production of block copolymers of the new CR, in particular with methyl methacrylate, using radical-type initiators such as potassium persulfate, benzoyl peroxide and dinitrile azo-bis-isobutyric acid .

The inoculation polymerisation method is used to impart fireproofing properties to the chemical fibres. The inoculation polymerisation method can be implemented from water emulsions of the new combustion retardant with the use of radical-type initiators such as potassium persulfate and the oxidation-reduction system Fe⁺² - H₂O₂.

The fireproofing indicators of the modified polymer materials were characterised by the following methods:
- oxygen index (OI) - minimal oxygen content in the oxygen-nitrogen mixture in which the combustion of the specimen is continued after the removal of the ignition source;
- residual combustion time: combustion time of the specimen after the removal of the ignition source;
- dripping - the fall of droplets of molten polymer dwing combustion and after the removal of the ignition source;
- PV fire resistance class - from 0 to 4 (in accordance with GOST 28157-89, a state standard of the former USSR) - analogous to finding the fire resistance class by the international method V from 0 to 4 (UL-94).

The invention is further illustrated by examples of its implementation.

### Examples of the implementation of the invention

### Example 1.

### Production ofmethyl(oxyalkyl)phosphono-oxyethylene methacrylate.

A triple-neck retort, fitted with a mixer, a reflux condenser and a thermometer, is loaded in the following sequence with weak mixing: 150 ml of chloroform, 26.6 g of dichloroanhydride of methylphosphonic acid and 6 g of methanol. The mixture obtained is cooled to 8-10°C, after which 27.6 g of hydroxyethyl ester of methacrylic acid and 45.2 g of triethylamine are added. The mixture obtained is kept at temperature 10-15°C under agitation for two hours. After this, the synthesised product has the triethylamine hydrochloride washed out of it with water (three times, using 150 ml of water each time). The chloroform is distilled out of the mixture obtained, and the vacuum distillation of the methyl(oxyakyl)phosphoro-oxyethylene methacrylate is then carried out at a temperature of 30-35°C and residual pressure 3-5 mm Hg. The output of the product is 67.9% of what is theoretically possible. Found molecular mass - 230; calculated molecular mass - 232.

Element composition: C - 41.6%; H - 6.8%; P - 13.1%. Calculated: C - 41.4%; H - 6.5%; P - 13.4%.

### Example 2.

One hundred g of viscose fibre are treated with a 7% water emulsion of methyl(oxyalkyl)phosphono-oxyethylene mehacrylate containing 1% (of the weight of the monomer) potassium persulfate, at temperature 80°C for 90 min., after which the specimen is washed with hot water (80-90°C) for 20 min, and dried. The modified viscose fibre is characterised by IO - 31%, no residual combustion time,

### Example 3.

One hundred g of cotton fibre are treated with a 9% water emulsion of methyl(oxyalkyl)phosphono-oxyethylene methacrylate, containing 1% (of the weight of the monomer) potassium persulfate, at temperature 90°C for 90 min., after which the specimen is washed with hot water (80-90°C) for 20 min. and dried. The modified cotton fibre is characterised by IO - 30%, no residual combustion time.

### Example 4.

One hundred g of polycaproamide fibre are treated with an 8% water emulsion of methyl(oxyalkyl)phosphono-oxyethylene methacrylate containing 1% (of the weight of the monomer) potassium persulfate, at temperature 90°C for 90 min., after which the specimen is washed with hot water (80-90°C) for 20 min. and dried. The modified polycaproamide fibre has OI - 27%, no residual combustion time, no dripping.

### Example 5.

One hundred g of polycaproamide fibre are treated with a 10% water emulsion of methyl(oxyalkyl)phosphono-oxyethylene methacrylate containing 1% (of the weight of the monomer) potassium persulfate, at temperature 90°C for 90 min., after which the specimen is washed with hot water (80-90°C) for 20 min. and dried. The modified polycaproamide fibre has OI - 29%, no residual combustion time, no dripping.

### Example 6.

Eighty g of methyl methacrylate are mixed with 20 g of methyl (oxyalkyl)phosphono-oxyethylene methacrylate, 0.8 g. of benzoyl peroxide are added and the mixture is polymerised at temperature 50-60°C for 5 hours. The prepolymer obtained is cast into silicate glass moulds and polymerised at 80°C for 24 hours. To exhaust the residual monomer, a second stage of polymerisation is carried out: heating to 120°C over 3 hours, retention at 120°C for 3 hours, and cooling to 40°C over 3 hours. The organic glass obtained was characterised by OI - 27%, no residual combustion time, no dripping, fire resistance class PV-0.

### Example 7.

Seventy-five g of methacrylate are mixed with 25 g of methyl(oxyalkyl) phosphono-oxyethylene methacrylate, 1.0 g of benzoyl peroxide is added and the mixture is polymerised at temperature 50-60°C for 5 hours to produce the prepolymer. The prepolymer obtained is cast into silicate glass moulds and polymerised at temperature 80°C for 26 hours. The second stage of polymerisation is carried out by heating the composition over 3 hours to temperature 120°C, retention at this temperature for 3 hours, and cooling to 30°C over 3.5 hours. The organic glass obtained has OI - 27.7%, no residual combustion time, no dripping, fire resistance class PV-0.

### Example 8.

Seventy g of methyl methacrylate are mixed with 30 g of methyl(oxyalkyl) phosphono-oxyethylene methacrylate, 1.0 g of dinitrile azo-bis-isobutyric acid is added and the mixture is polymerised at temperature 60-65°C for 5 hours to produce the prepolymer. The prepolymer obtained is cast into silicate glass moulds and polymerised at temperature 80°C for 25 hours. Polymerisation is completed by heating the composition over 3 hours to temperature 120°C, retention at this temperature for 3 hours, and cooling to 30°C over 3.5 hours. The organic glass obtained has OI - 28.2%, no residual combustion time, no dripping, fire resistance class PV-0.

## Claims

1. Combustion retardant for polymer materials, consisting of methyl (oxyalkyl)phosphono-oxyethylene methacrylate of formula:
**CH**_{**2**}**=C(R)-C(O)[0CH**_{**2**}**CH**_{**2**}**OP(O)(R)(OR**_{**1**}**)]** (1)
**where R - CH**_{**3**}**; R**_{**1**} **- CH**_{**3**}**, C**_{**2**}**H**_{**5**}**, C**_{**3**}**H**_{**7**}**, C**_{**4**}**H**_{**9**}**.**

2. Process for producing low fire risk polymer materials by the copolymerisation of monomers, ***characterised* in that** at least one of the compounds of Formula 1 is used as one of the monomers.

3. Process in accordance with Claim 2, ***characterised* in that** at least one of the compounds of Formula 1 is copolymerised with methyl methacrylate.

4. Process in accordance with Claim 3, ***characterised* in that** copolymerisation is carried out at 55-120°C.

5. Process for producing low fire risk polymer materials, ***characterised* in that** at least one of the compounds of Formula 1 is inoculated as a copolymer into polymer material in the form of fibres.

6. Process in accordance with Claim 5, ***characterised* in that** inoculation polymerisation is carried out by treating the fibres with a water emulsion of at least one of the compounds of Formula 1 in the presence of a radical-type polymerisation initiator at temperature 70-90°C.

7. Process in accordance with Claim 6, ***characterised* in that** potassium persulfate is used as the polymerisation initiator.

8. Process for producing low fire risk polymer materials in accordance with Claim 5, ***characterised* in that** viscose fibre is used as the fibres.

9. Process for producing low fire risk polymer materials in accordance with Claim 5, ***characterised* in that** cotton fibre is used as the fibres.

10. Process for producing low fire risk polymer materials in accordance with Claim 5, ***characterised* in that** polycaproamide fibre is used as the fibres.

11. Low fire risk viscose fibres, produced by a process in accordance with Claim 8.

12. Low fire risk cotton fibres, produced by a process in accordance with Claim 9.

13. Low fire risk polycaproamide fibres, produced by a process in accordance with Claim 10.

14. Organic glasses based on low-combustibility polymethyl methacrylate, produced by a process in accordance with Claim 4.
